# EUROPEAN PATENT APPLICATION

(11) **EP 1 355 101 A2**
(43) Date of publication of application: **22.10.2003**
(21) Application number: 03252509.9
(22) Date of filing: 22.04.2003
(51) Int. Cl.: F16L 37/092

(54) **A releasable coupling**

(30) Priority: 18.04.2002 GB 0208911
(71) Applicant: Polypipe Building Products Ltd., Edlington, Doncaster DN12 1ES (GB)
(72) Inventor: Baker, Peter, c/o Polypipe Building Products Ltd., Edlington, Doncaster DN12 1ES (GB)
(74) Representative: Jacob, Reuben Ellis

(57) **Abstract**

The invention relates to a releasable coupling 1, defining a bore 2 for receiving a pipe (not shown), a releasable locking member 3 within the bore 2, and locking means 4 disposed to force the locking member 3 to grip the pipe on axial movement of the pipe from the coupling 1, the locking means 4 being adjustable to allow release of the pipe from the locking member for removal from the coupling 1.

## Description

The invention relates to a releasable coupling, and in particular relates to releasable coupling for connecting tubing for distribution of fluids.

Push-fit connectors are known and provide a convenient and quick method of forming joins between lengths of tubes or pipes and fittings. They can be releasable, wherein the pipe or tube can be withdrawn, or non-releasable, whereafter a pipe or tube is inserted it cannot be readily removed. One problem which has been experienced with existing types of releasable pipe coupling is that of accidental release, which can cause flooding and water wastage. It is an object of the present invention to seek to mitigate problems such as this.

According to the invention there is provided a releasable coupling, defining a bore for receiving a pipe, a releasable locking member within the bore, and locking means disposed to force the locking member to grip the pipe on axial movement of the pipe from the coupling, the locking means being adjustable to allow release of the pipe from the locking member for removal from the coupling.

Thus, it can be seen that the problem of accidental release is substantially mitigated because two distinct operations, adjustment of the locking means and release of the locking member, are required for removal of the pipe to occur. When the pipe is inserted initially it is locked in place by the locking member which is acted on by the locking means to prevent removal of the pipe if an axial outward movement of the pipe occurs. To release the pipe it is necessary to adjust the locking means so that the locking member can then be operated to allow for removal of the pipe.

It is preferred that the locking means is adjustable by being movable axially outwardly relative to a pipe therein and it is particularly preferred that the adjustment is effected by rotation of the locking means. This provides a neat and compact structure which does not require the coupling to be any larger than known releasable couplings.

The locking means may define a portion of the bore which again aids in creating a compact structure. It is preferred that the said portion tapers towards the mouth of the bore.

Locking means may comprise a ring attached to the remainder of the coupling by means of cooperating screw threads. This is a convenient method of attaching the locking means whilst enabling it to move axially from the locked to the unlocked positions.

In one embodiment the ring may be removable from the remainder of the coupling.

The invention will further be described by way of example only and with reference to the following drawings in which,
Figure 1 is a side view of a releasable coupling according to the invention; and
Figure 2 is a part longitudinal sectional view of the coupling shown in Figure 1.

Referring to the drawings there is illustrated a releasable coupling 1, defining a bore 2 for receiving a pipe (not shown), a releasable locking member 3 within the bore 2, and locking means 4 disposed to force the locking member 3 to grip the pipe on axial movement of the pipe from the coupling 1, the locking means 4 being adjustable to allow release of the pipe from the locking member for removal from the coupling 1.

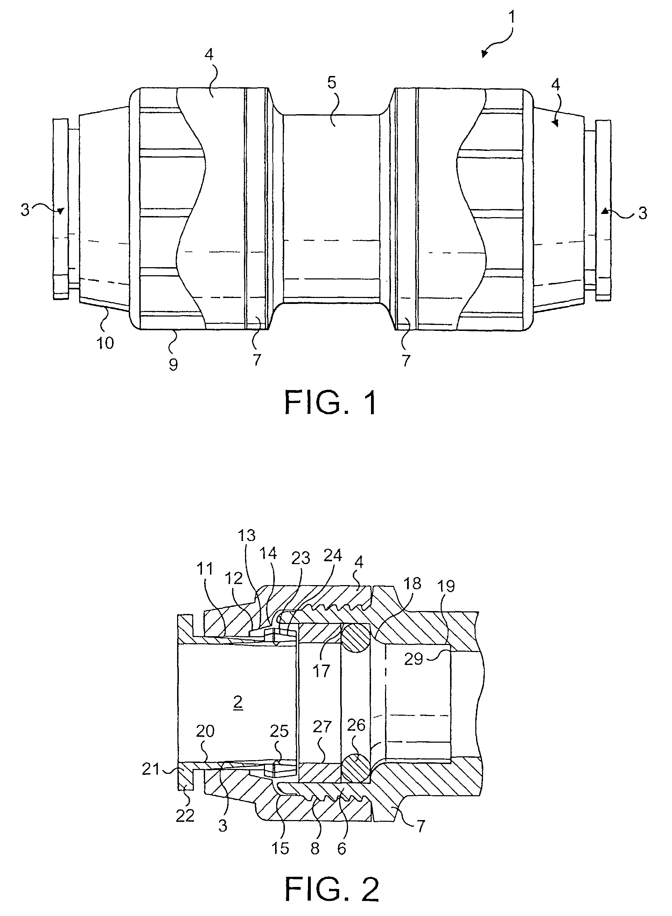

The invention is embodied in the present example in the form of a coupling 1 which is used to releasably join pipes and fittings in a water supply system. In Figure 1 the coupling 1 is illustrated which has two "ends" into which pipes can be inserted to form a join. The coupling includes a cylindrical middle section 5 having a first diameter bordered on each side by a circumferential flange 7 of wider diameter and respective end sections 6 of similar diameter to the middle section 5 and having on their outer surface screw threads 8. Each end section 6 has placed upon it locking means 4 which in this embodiment takes the form of a cap. Each cap 4 comprises a first cylindrical portion 9 having an internal screw thread and is dimensioned to screw onto a corresponding screw thread 8 of an end section 6. The cylindrical portion 9 joins to a tapering portion 10.

When assembled with the cap in place on the coupling 1 the bore 2 is defined. The bore 2 is dimensioned to accommodate a pipe of a given diameter and comprises, working from the mouth of the bore inwards, a first diameter 11, a shoulder 12, a tapered cam portion 13 tapering towards the mouth, a second shoulder 14, an arcuate section 15, a second diameter 17, a fourth shoulder 18, a third diameter 19, and a fifth shoulder 29.

The coupling 1 has a locking member 3 in the form of a collet comprising four resilient, axially extending arms 20 extending from a ring 21. The ring 21 has a flange or washer 22. Each arm 20 has towards its distal end a thickening, with a nib 23, an outer cam surface 24 and metal inserts forming teeth 25. By virtue of the fact that they are resilient the arms 29 can be radially compressed inwardly or radially expanded outwardly. Collets of this type are known to those of skill in the art and will not be described further.

Referring in particular to Figure 2, to assemble the coupling 1, an O-ring seal 26 is first inserted into the bore 2 so that it seats against the fourth shoulder 18 in the second diameter 17. A spacer 27 is then inserted to but up against the O-ring seal 26. The cap 4 is then applied to the end section 6 by means of the cooperating screw threads 8, the cap being screwed onto the end section 6 until it buts up against circumferential flange 7. The locking member 3 is then inserted into the bore 2. To accommodate the arms 20 they must be radially inwardly compressed to move past the first portion 11 after which the arms 20 return to their original spacing due to the increased diameter of the bore at the tapered portion 13 and second diameter 17. The collet 3 is prevented from entering the bore 2 completely by flange 22.

In use, a pipe is inserted into the coupling so that the end buts up against the fifth shoulder 29. The O-ring 26 provides a fluid tight seal around its outer circumference and the teeth 25 lightly bite into the surface. If it is attempted to withdraw the pipe from the coupling 1 the pipe plus loosely attached collet moves axially to the right as viewed so that the nibs 23 of the collet arms are brought into contact with the tapered portion 13 which causes them to bite into the surface of the pipe impeding its removal. Thus, in this form the pipe cannot be accidentally released from the coupling 1.

When it is desired to release the pipe from the coupling, the locking means 4 is adjusted to allow release of the pipe from the locking member 3 by unscrewing the cap 5 away from the circumferential flange 7. This allows the collet 4 to be pushed and held axially inwardly in the bore 2 so that when the pipe is withdrawn the collet remains in position with the ribs in the wider diameter part of the bore 2 so that the teeth 25 do not bite into its surface.

## Claims

1. A releasable coupling, defining a bore for receiving a pipe, a releasable locking member within the bore, and locking means disposed to force the locking member to grip the pipe on axial movement of the pipe from the coupling, the locking means being adjustable to allow release of the pipe from the locking member for removal from the coupling.

2. A coupling according to claim 1, the locking means being adjustable by being movable axially outwardly relative to a pipe therein.

3. A coupling according to claim 1 or claim 2, adjustment being effected by rotation of the locking means.

4. A coupling according to any preceding claim, the locking means defining a portion of the bore.

5. A coupling according to claim 4, the portion tapering towards the mouth of the bore.

6. A coupling according to any of claims 3 to 5, the locking means comprising a ring attached to the remainder of the coupling by means of cooperating screw threads.

7. A coupling according to claim 6, the ring being removable from the remainder of the coupling.

8. A coupling substantially as hereinbefore described, with reference to the accompanying drawings.
